# EUROPEAN PATENT APPLICATION

(11) **EP 4 748 765 A1**
(43) Date of publication of application: **27.05.2026**
(21) Application number: 25202674.5
(22) Date of filing: 17.09.2025
(51) Int. Cl.: B65H 31/02, B65H 29/52, B65H 31/22, B41J 3/50

(54) **SUPPORT SYSTEM AND METHOD FOR A SUPPORT SYSTEM COUPLED TO A RADIO FREQUENCY IDENTIFICATION DEVICE (RFID) PRINTER**

(30) Priority: 22.11.2024 US 202418956731
(71) Applicant: The Boeing Company, Arlington, VA 22202 (US)
(72) Inventor: Kreitle, Joseph, Arlington, VA, 22202 (US); Alexander, Neil Adams, Arlington, VA, 22202 (US); Yu, John Jiang, Arlington, VA, 22202 (US)
(74) Representative: Hoffmann Eitle

(57) **Abstract**

A support system is configured to couple to a radio frequency identification device (RFID) printer. The support system includes a tray having a support ledge configured to abut against the RFID printer below a media outlet of the RFID printer. The support ledge is configured to support a portion of an RFID component configured to be output by the RFID printer through the media outlet. The tray also includes a guide ramp connected to the support ledge at an angle. The guide ramp is configured to slidably support the RFID component after the RFID component pivots off the support ledge.

## Description

### FIELD OF THE DISCLOSURE

Examples of the present disclosure generally relate to a support system and method for a radio frequency identification device (RFID) printer.

### BACKGROUND OF THE DISCLOSURE

RFID printers are used to produce RFID components, such as RFID tags. During operation, RFID printers may be susceptible to jamming. For example, RFID tags that are output though a media outlet of an RFID printer can become stuck, thereby causing jamming, failed encoding, material waste, and down time. In order to reduce the potential of such issues, individuals may hold an end of an RFID tag as it moves through and out of the media outlet.

### SUMMARY OF THE DISCLOSURE

A need exists for a system and a method for supporting components output by an RFID printer. Further, a need exists for a system and a method for automatically supporting (without human intervention) RFID components during operation of an RFID printer.

With those needs in mind, certain examples of the present disclosure provide a support system configured to couple to an RFID printer. The support system includes a tray having a support ledge configured to abut against the RFID printer below a media outlet of the RFID printer. The support ledge is configured to support a portion of an RFID component configured to be output by the RFID printer through the media outlet. A guide ramp is connected to the support ledge at an angle. The guide ramp is configured to slidably support the RFID component after the RFID component pivots off the support ledge.

In at least one example, the tray is formed of a composite material including recycled carbon fibers.

In at least one example, the angle is between 52.5-57.5 degrees. As a further example, the angle is 55 degrees.

In at least one example, the guide ramp has a length of 17.78 cm (7 inches).

In at least one example, the support ledge has a length less than a length of an RFID component configured to be output by the RFID printer. As a further example, the length of the support ledge is 3.556 cm (1.4 inches).

In at least one example, the support ledge has a width that is greater than a width of the media outlet of the RFID printer. As a further example, the width of the support ledge is 15.24 cm (6 inches).

In at least one example, the support ledge is configured to be parallel to a top surface of a structure that supports the RFID printer.

In at least one example, the tray further includes a support lip extending from a forward lower end of the guide ramp. The support lip can be parallel to the support ledge.

Certain examples of the present disclosure provide a method including supporting a portion of the RFID component on the support ledge as the RFID component is output by the RFID printer through the media outlet; and slidably supporting (and improved movability of) the RFID component on the guide ramp after the RFID component pivots off the support ledge.

Certain examples of the present disclosure provide a system including an RFID printer, and a support system coupled to the RFID printer, as described herein.

### BRIEF DESCRIPTION OF THE DRAWINGS

Figure 1 illustrates a block diagram of a support system for an RFID printer, according to an example of the present disclosure.
Figure 2 illustrates a perspective bottom view of the support system, according to an example of the present disclosure.
Figure 3 illustrates a perspective top view of the support system of Figure 2.
Figure 4 illustrates a perspective side view of the support system coupled to the RFID printer, according to an example of the present disclosure.
Figure 5 illustrates a perspective front view of the support system coupled to the RFID printer.
Figure 6 illustrates a perspective front view of the support system supporting an RFID component being output through a media outlet of the RFID printer.
Figure 7 illustrates a flow chart of a method, according to an example of the present disclosure.

### DETAILED DESCRIPTION OF THE DISCLOSURE

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular condition can include additional elements not having that condition.

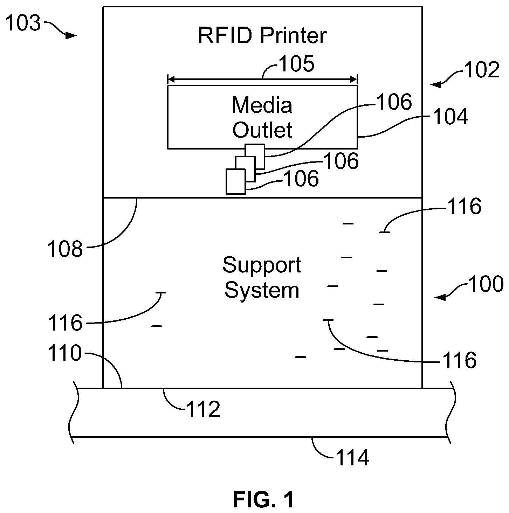

Figure 1 illustrates a block diagram of a support system 100 for an RFID printer 102, according to an example of the present disclosure. A system 103 includes the support system 100 and the RFID printer 102. The RFID printer 102 includes a media outlet 104 through which an RFID component 106 is output. In at least one example, the RFID component 106 is an RFID tag, which can be affixed to another structure. The RFID printer 102 encodes information on the RFID component 106. For example, the RFID printer 102 encodes a serial number, a part number, a date of manufacture, the identity of the manufacturer, and/or the like on the RFID component 106. The RFID printer 102 operates to thermally transfer and digitally encode information onto the RFID component 106.

The RFID printer 102 outputs the RFID component 106 through and out of the media outlet 104. The support system 100 is coupled to the RFID printer 102, and supports the RFID component 106 as the RFID tag is output through the media outlet 104. In at least one example, the support system 100 is sized and shaped to abut against the RFID printer 102 below the media outlet 104, For example, a first end 108 of the support system 100 abuts against an outer wall of the RFID printer 102 below the media outlet 104, and a second end 110 (opposite from the first end 108) abuts against the top surface 112 of a structure 114, such as a table, desk, floor, or the like, which supports the RFID printer 102.

In at least one example, the support system 100 is formed of a composite material including carbon fibers 116, such as pre-impregnated fiber(s) and carbon cured resin. As a further example, the support system 100 is formed of recycled pre-impregnated carbon fiber(s) (such as can be bagged and cured), which thereby reduces waste by reusing materials from scrap, and/or structures no longer suitable for production.

In operation, the support system 100 provides support for the RFID components 106 as they are output by the RFID printer 102 through the media outlet 104, thereby reducing potential jamming, and ensuring the integrity of an encoding process performed by the RFID printer 102.

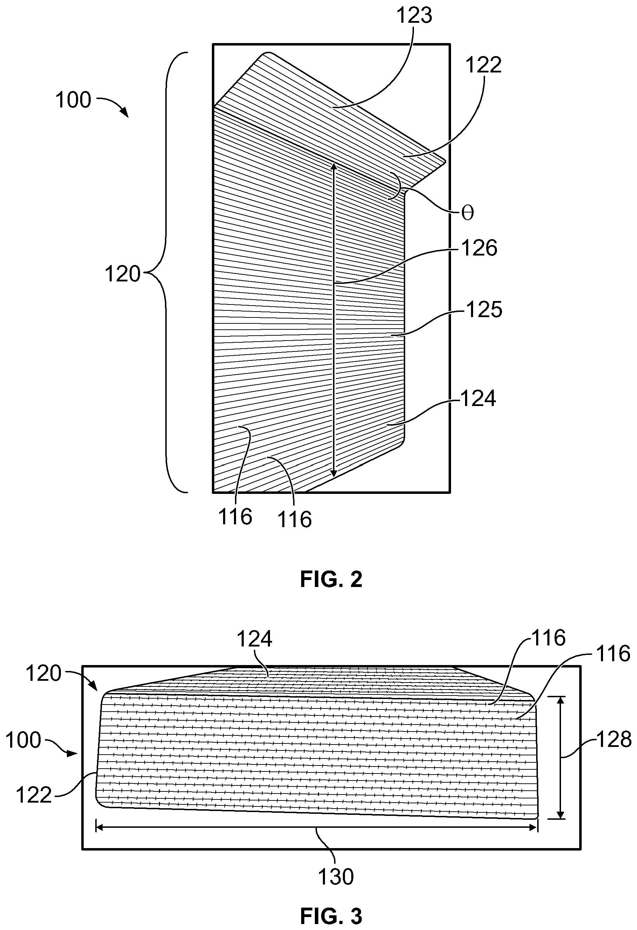

Figure 2 illustrates a perspective bottom view of the support system 100, according to an example of the present disclosure. Figure 3 illustrates a perspective top view of the support system 100 of Figure 2. Referring to Figures 2 and 3, the support system 100 includes a tray 120 having a support ledge 122 connected to a guide ramp 124. As noted, the tray 120 is formed of a composite material including carbon fibers 116 (for example, pre-impregnated carbon fiber cured material). The support ledge 122 (that is, a bottom surface 123 of the support ledge 122) connects to the guide ramp 124 (that is, a rear surface 125 of the guide ramp 124) at an angle Θ. In at least one example, the angle Θ is between 52.5-57.5 degrees. In particular, in at least one example, the angle Θ is 55 degrees. The guide ramp 124 has a length 126. For example, the length 126 can be 17.78 cm (7 inches). The length 126 of 17.78 cm (7 inches) of the guide ramp 124, and the angle Θ of 55 degrees provides a secure coupling of the support system 100 between the RFID printer 102 and the structure 114.

Referring to Figures 1-3, the support ledge 122 has a length 128, and a width 130. In at least one example, the length 128 of the support ledge 122 is less than a length of the RFID component 106. In this manner, the support ledge 122 provides support to the RFID component 106 as it is output from the media outlet 104, while allowing a front portion of the RFID component 106 to overhang the support ledge 122 (as the RFID component 106 moves outwardly from the media outlet 104), so that the weight of the RFID component 106 pivots the RFID component 106 onto the guide ramp 124, and slides over and down the guide ramp 124. In at least one example, the length 128 is between 50-90% a length of an RFID component 106 that is output from the media outlet 104. As a further example, the length 128 is 1.4", which has been found to provide improved support of the RFID component 106, while eliminating, minimizing, or otherwise reducing potential jamming of the RFID printer 102.

In at least one example, the width 130 of the support ledge 122 is greater than a width 105 of the media outlet 104. As such, the width 130 ensures that the support ledge 122 receives and supports any RFID component 106 that is output through any portion of the media outlet 104. In at least one example, the width 130 is 15.24 cm (6 inches). Optionally, the width can be less than 15.24 cm (6 inches) (such as 12.7 cm (5 inches)), or greater than 15.24 cm (6 inches) (such as 17.78 cm (7 inches)).

It has been found that the angle Θ of 55 degrees between the support ledge 122 and the guide ramp 124, a length 128 of the support ledge 122 of 3.556 cm (1.4 inches), and a length 126 of the guide ramp 124 of 17.78 cm (7 inches) combine together to effectively, efficiently, and safely facilitate support of the RFID component 106 output through the media outlet 104, while also resisting jamming of the RFID printer 102, and also providing safe and efficient delivery of the RFID component 106 away from the RFID printer 102, thereby eliminating, minimizing, or otherwise reducing any potential damage to the RFID component 106.

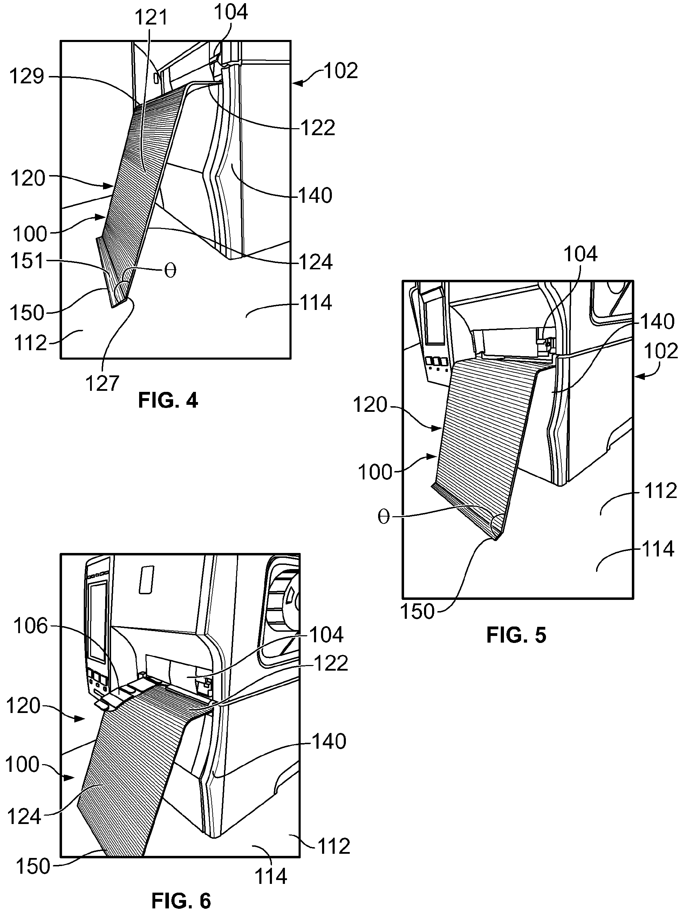

Figure 4 illustrates a perspective side view of the support system 100 coupled to the RFID printer 102, according to an example of the present disclosure. Figure 5 illustrates a perspective front view of the support system 100 coupled to the RFID printer 102. Figure 6 illustrates a perspective front view of the support system 100 supporting an RFID component 106 being output through a media outlet 104 of the RFID printer 102. Referring to Figures 1-6, the support system 100 is sized and shaped to secure between a front wall 140 of the RFID printer 102, and the top surface 112 of the structure 114, such as a table, desk, a floor, a surface of device, or the like. In particular, the angle Θ of 55 degrees between the support ledge 122 and the guide ramp 124, a length 128 of the support ledge 122 of 3.556 cm (1.4 inches), and a length 126 of the guide ramp 124 of 17.78 cm (7 inches) securely wedges the support system 100 between the RFID printer 102 and the structure 114, which may not require any additional fasteners, adhesives, or the like. Optionally, an adhesive, such as double-sided tape, can be used to secure the support ledge 122 to the front wall 140, and/or the guide ramp 124 to the top surface 112. As another example, the support system 100 can include one or more latches, clamps, or the like that securely couple to reciprocal structures of the RFID printer 102.

As shown, the support ledge 122 is disposed below the media outlet 104. For example, the support ledge 122 can be 2.54 cm (1 inch) or less below a bottom edge of the media outlet 104. In at least one example, the angle Θ of 55 degrees between the support ledge 122 and the guide ramp 124 ensures that the support ledge 122 is parallel to the top surface 112 of the structure 114 (which supports the RFID printer 102), thereby providing improved initial support to the RFID component 106 as it moves out of the media outlet 104. Alternatively, the support ledge 122 may not be parallel to the top surface 112.

In at least one example, the tray 120 further includes a support lip 150, which is parallel to the top surface 112 of the structure 114 (and optionally parallel to the support ledge 122). The support lip 150 forwardly extends from a front end of the guide ramp 124. The support lip 150 rests over the top surface 112 of the structure 114. The support lip 150 is at an opposite end of the guide ramp 124 than the support ledge 122. In at least one example, the support lip 150 extends from the guide ramp 124 in an opposite direction than the support ledge 122. For example, the support lip 150 extends forwardly from a forward lower end 127 of the guide ramp 124, while the support ledge 122 extends rearwardly from a rearward upper end 129 of the guide ramp 124. In at least one example, the support lip 150 connects to the guide ramp 124 at the angle Θ (that is, a top surface 151 of the support lip 150 connects to a front surface 121 of the guide ramp 124 at the angle Θ). The support lip 150 provides a landing and resting support area for the RFID components 106 at a termination of their slide down the guide ramp 124. The support lip 150 retains the RFID components 106 in an upright position against the front surface 121 of the guide ramp 124. Optionally, the support system 100 may not include the support lip 150.

As described herein, the support system 100 includes the support ledge 122, which couples to the RFID printer 102 below the media outlet 104 to provide a supporting shelf of sufficient pitch and dimensions to bear weight through operation of the RFID printer 102 (such as RFID encoding and feed transfer) to prevent jamming, damage to an encoder of the RFID printer 102, and the like. Further, in at least one example, the support system 100 is formed of a carbon fiber material, which exhibits low electrical conductivity levels (<10² Siemens per meter (S/m)) in contrast to alternative material substrates, and thereby minimizes or otherwise reduces electrical static discharge, while also preventing signal interferences with the encoder of the RFID printer 102. Further, by using recycled carbon fiber material to form the support system 100, examples of the present disclosure reduce manufacturing costs, as well as material waste (as scrap material or material previously used is recycled to form the support system 100).

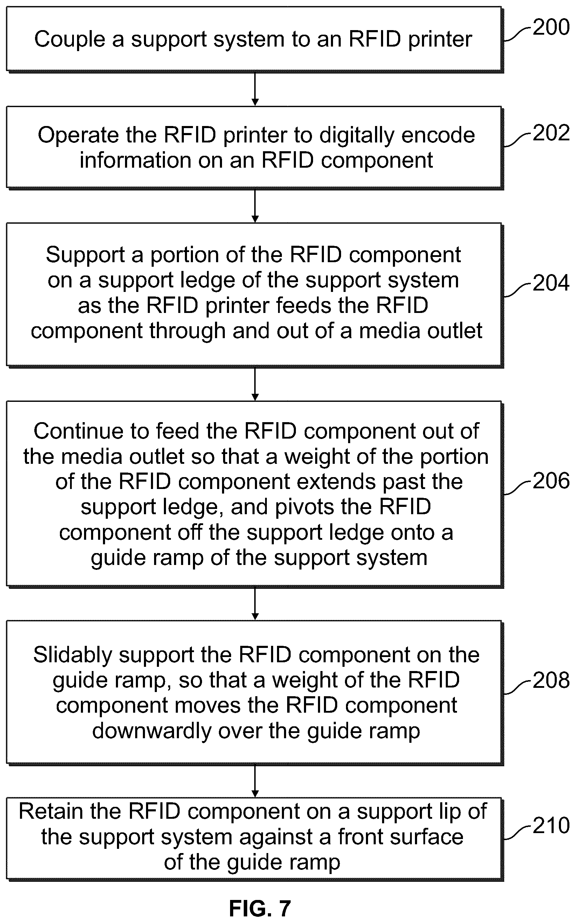

Figure 7 illustrates a flow chart of a method, according to an example of the present disclosure. Referring to Figures 1-7, at 200, the support system 100 is coupled to the RFID printer 102. At 202, the RFID printer 102 is operated to digitally encode information on an RFID component 106. At 204, a portion of the RFID component 106 is supported on the support ledge 122 of the support system 100 as the RFID printer 102 feeds the RFID component 106 through and out of the media outlet 104. At 206, the RFID printer 102 continues to feed the RFID component 106 out of the media outlet 104 so that a weight of the portion of the RFID component extends forwardly past the support ledge 122, and pivots the RFID component 106 off the support ledge onto the front surface 121 of the guide ramp 124. At 208, the RFID component 106 is slidably supported on the guide ramp 124, so that a weight of the RFID component 106 moves the RFID component 106 (via gravity) downwardly over the front surface 121 of the guide ramp 124. At 210, the RFID component 106 comes to rest on, and is retained on the support lip 150 and the front surface 121 of the guide ramp 124.

Further, the disclosure includes examples according to the following clauses:
Clause 1. A support system configured to couple to a radio frequency identification device (RFID) printer, the support system comprising:
   a tray including:
   a support ledge configured to abut against the RFID printer below a media outlet of the RFID printer, wherein the support ledge is configured to support a portion of an RFID component configured to be output by the RFID printer through the media outlet; and
   a guide ramp connected to the support ledge at an angle, wherein the guide ramp is configured to slidably support the RFID component after the RFID component pivots off the support ledge.
Clause 2. The support system of Clause 1, wherein the tray is formed of a composite material including recycled carbon fibers.
Clause 3. The support system of Clauses 1 or 2, wherein the angle is between 52.5-57.5 degrees.
Clause 4. The support system of Clause 3, wherein the angle is 55 degrees.
Clause 5. The support system of Clause 5, wherein the guide ramp has a length of 17.78 cm (7 inches).
Clause 6. The support system of any of Clauses 1-5, wherein the support ledge has a length less than a length of an RFID component configured to be output by the RFID printer.
Clause 7. The support system of Clause 6, wherein the length of the support ledge is 3.556 cm (1.4 inches).
Clause 8. The support system of any of Clauses 1-7, wherein the support ledge has a width that is greater than a width of the media outlet of the RFID printer.
Clause 9. The support system of Clause 8, wherein the width of the support ledge is 15.24 cm (6 inches).
Clause 10. The support system of any of Clauses 1-9, wherein the support ledge is configured to be parallel to a top surface of a structure that supports the RFID printer.
Clause 11. The support system of any of Clauses 1-10, wherein the tray further comprises a support lip extending from a forward lower end of the guide ramp.
Clause 12. The support system of any of Clauses 1-11, wherein the support lip is parallel to the support ledge.
Clause 13. A method for a support system coupled to a radio frequency identification device (RFID) printer, the support system comprising:
   a tray including:
      a support ledge configured to abut against the RFID printer below a media outlet of the RFID printer; and
      a guide ramp connected to the support ledge at an angle,
   the method comprising:
      supporting a portion of the RFID component on the support ledge as the RFID component is output by the RFID printer through the media outlet; and
      slidably supporting the RFID component on the guide ramp after the RFID component pivots off the support ledge.
Clause 14. A system comprising:
   a radio frequency identification (RFID) printer having a media outlet, wherein the RFID printer is configured to output an RFID component through and out of the media outlet; and
   a support system coupled to the RFID printer, the support system comprising a tray including:
      a support ledge abutting against the RFID printer below the media outlet of the RFID printer, wherein the support ledge is configured to support a portion of the RFID component as the RFID component is output by the RFID printer through the media outlet; and
      a guide ramp connected to the support ledge at an angle, wherein the guide ramp is configured to slidably support the RFID component after the RFID component pivots off the support ledge.
Clause 15. The system of Clause 14, wherein the tray is formed of a composite material including recycled carbon fibers.
Clause 16. The system of Clause 15, wherein the angle is 55 degrees.
Clause 17. The system of Clause 16, wherein the guide ramp has a length of 17.78 cm (7 inches).
Clause 18. The system of Clause 17, wherein the support ledge has a length of 3.556 cm (1.4 inches), and a width of 15.24 cm (6 inches).
Clause 19. The system of Clause 18, wherein the tray further comprises a support lip extending from a forward lower end of the guide ramp.
Clause 20. The system of Clause 19, wherein the support lip is parallel to the support ledge.

As described herein, examples of the present disclosure provide systems and methods for supporting components output by an RFID printer. Further, examples of the present disclosure provide systems and methods for automatically supporting (without human intervention) RFID components during operation of an RFID printer.

While various spatial and directional terms, such as top, bottom, lower, mid, lateral, horizontal, vertical, front and the like can be used to describe embodiments of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described embodiments (and/or aspects thereof) can be used in combination with each other. In addition, many modifications can be made to adapt a particular situation or material to the teachings of the various embodiments of the disclosure without departing from their scope. While the dimensions and types of materials described herein are intended to define the parameters of the various embodiments of the disclosure, the embodiments are by no means limiting and are exemplary embodiments. Many other embodiments will be apparent to those of skill in the art upon reviewing the above description. The scope of the various embodiments of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various embodiments of the disclosure, including the best mode, and also to enable any person skilled in the art to practice the various embodiments of the disclosure, including making and using any devices or systems and performing any incorporated methods. The patentable scope of the various embodiments of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A support system (100) configured to couple to a radio frequency identification device (RFID) printer, the support system (100) comprising:
a tray (120) including:
a support ledge (122) configured to abut against the RFID printer (102) below a media outlet (104) of the RFID printer (102), wherein the support ledge (122) is configured to support a portion of an RFID component (106) configured to be output by the RFID printer (102) through the media outlet (104); and
a guide ramp (124) connected to the support ledge (122) at an angle, wherein the guide ramp (124) is configured to slidably support the RFID component (106) after the RFID component (106) pivots off the support ledge (122).

2. The support system (100) of claim 1, wherein the tray (120) is formed of a composite material including recycled carbon fibers (116).

3. The support system (100) of claim 1 or 2, wherein the angle is between 52.5-57.5 degrees,
wherein the angle optionally is 55 degrees.

4. The support system (100) of any of claims 1-3, wherein the guide ramp (124) has a length (126, 128) of 17.78 cm (7 inches).

5. The support system (100) of any of claims 1-4, wherein the support ledge (122) has a length (126, 128) less than a length (126, 128) of an RFID component (106) configured to be output by the RFID printer (102),
wherein the length (126, 128) of the support ledge (122) optionally is 3.556 cm (1.4 inches).

6. The support system (100) of any of claims 1-5, wherein the support ledge (122) has a width that is greater than a width of the media outlet (104) of the RFID printer (102),
wherein the width of the support ledge (122) optionally is 15.24 cm (6 inches).

7. The support system (100) of any of claims 1-6, wherein the support ledge (122) is configured to be parallel to a top surface (112) of a structure (114) that supports the RFID printer (102).

8. The support system (100) of any of claims 1-7, wherein the tray (120) further comprises a support lip extending from a forward lower end of the guide ramp (124),
wherein the support lip optionally is parallel to the support ledge (122).

9. A method for a support system (100) coupled to a radio frequency identification device (RFID) printer, the support system (100) comprising:
a tray (120) including:
a support ledge (122) configured to abut against the RFID printer (102) below a media outlet (104) of the RFID printer (102); and
a guide ramp (124) connected to the support ledge (122) at an angle,
the method comprising:
supporting a portion of the RFID component (106) on the support ledge (122) as the RFID component (106) is output by the RFID printer (102) through the media outlet (104); and
slidably supporting the RFID component (106) on the guide ramp (124) after the RFID component (106) pivots off the support ledge (122).

10. A system (103) comprising:
a radio frequency identification device (RFID) printer having a media outlet (104), wherein the RFID printer (102) is configured to output an RFID component (106) through and out of the media outlet (104); and
a support system (100) coupled to the RFID printer (102), the support system (100) comprising a tray (120) including:
a support ledge (122) abutting against the RFID printer (102) below the media outlet (104) of the RFID printer (102), wherein the support ledge (122) is configured to support a portion of the RFID component (106) as the RFID component (106) is output by the RFID printer (102) through the media outlet (104); and
a guide ramp (124) connected to the support ledge (122) at an angle, wherein the guide ramp (124) is configured to slidably support the RFID component (106) after the RFID component (106) pivots off the support ledge (122).

11. The system (103) of claim 10, wherein the tray (120) is formed of a composite material including recycled carbon fibers (116).

12. The system (103) of claim 10 or 11, wherein the angle is 55 degrees.

13. The system (103) of any of claims 10-12, wherein the guide ramp (124) has a length (126, 128) of 17.78 cm (7 inches).

14. The system (103) of any of claims 10-13, wherein the support ledge (122) has a length (126, 128) of 3.556 cm (1.4 inches), and/or a width of 15.24 cm (6 inches).

15. The system (103) of any of claims 10-14, wherein the tray (120) further comprises a support lip extending from a forward lower end of the guide ramp (124),
wherein the support lip optionally is parallel to the support ledge (122).
